**Europäisches Patentamt**

**European Patent Office**

**Office européen des brevets**

(19)

(11) Veröffentlichungsnummer: **0 064 741**
**B1**

(12)

# EUROPÄISCHE PATENTSCHRIFT

(45) Veröffentlichungstag der Patentschrift:
**13.02.85**

(21) Anmeldenummer: **82103992.2**

(22) Anmeldetag: **07.05.82**

(51) Int. Cl.⁴: **B 23 Q 16/00,** B 23 Q 5/56,
B 23 Q 1/28, B 23 Q 17/24

(54) **Teilapparat für eine programmgesteuerte Werkzeugmaschine.**

(30) Priorität: **07.05.81 DE 3118141**

(43) Veröffentlichungstag der Anmeldung:
**17.11.82 Patentblatt 82/46**

(45) Bekanntmachung des Hinweises auf die Patenterteilung:
**13.02.85 Patentblatt 85/7**

(84) Benannte Vertragsstaaten:
**CH FR GB IT LI**

(56) Entgegenhaltungen:
**EP - A - 0 023 197**
**DE - B - 1 122 264**
**DE - B - 1 182 504**
**FR - A - 1 534 023**
**GB - A - 585 806**
**GB - A - 652 927**
**US - A - 2 465 497**
**US - A - 3 083 594**
**US - A - 3 306 412**

(73) Patentinhaber: **MAHO WERKZEUGMASCHINENBAU BABEL & CO., Postfach 1280, D-8962 Pfronten (DE)**

(72) Erfinder: **Babel, Werner, Achweg 19, D-8962 Pfronten-Meilingen (DE)**

(74) Vertreter: **Patentanwälte Beetz sen. - Beetz jun. Timpe - Siegfried - Schmitt-Fumian, Steinsdorfstrasse 10, D-8000 München 22 (DE)**

# Beschreibung

Die Erfindung betrifft gemäß Oberbegriff von Anspruch 1 einen Teilapparat für eine Werkzeugmaschine wie er beispielsweise mit der GB-A 585 806 bekanntgeworden ist.

Teilapparate werden zur Herstellung von Werkstücken verwendet, die entweder während oder zwischen den einzelnen Bearbeitungsvorgängen kontinuierlich oder um bestimmte gleichbleibende Winkelbeträge verdreht werden.

Es wird zwischen direktem, indirektem und Ausgleichsteilen unterschieden. Die zur Zeit in der Praxis eingesetzten Teilapparate weisen durchwegs eine sog. Teil- oder Lochscheibe auf, die entweder direkt auf der Teilspindel oder auf einer gesondert drehangetriebenen Welle sitzt. Beim indirekten ebenso wie beim Ausgleichsteilen wird die Teilspindel über eine Schnecke und ein Schneckenrad motorisch angetrieben, wobei das Untersetzungsverhältnis des Schneckengetriebes meist bei 40 : 1 bzw. 50 : 1 liegt. Die Lochscheiben sind auswechselbar und weisen meist mehrere mittelpunktsgleiche Lochkreise mit verschiedenen Lochzahlen auf, wobei die Abstände zwischen den Löchern jedes einzelnen Lochkreises gleich sind.

Derartige Teilapparate oder auch Teilköpfe weisen an mindestens einer Außenfläche des Gehäuses Spannmittel auf, mit denen sie entweder auf einem Werkstücktisch oder an im Ständer verfahrbare Senkrecht- oder Horizontalschlitten angebaut werden können.

Die Werkstücke werden entweder einseitig in einer Kurzkegel-Futteraufnahme oder aber beidseitig zwischen der Futteraufnahme und einer an einem Gegenhalter höhenverstellbar montierten Körnerspitze eingespannt. Bei Verwendung derartiger bekannter Teilköpfe in NC-gesteuerten Werkzeugmaschinen haben sich jedoch die die jeweilige Teilung bestimmenden Lochscheiben und/oder Skalentrommeln als nachteilig erwiesen, da sie insbesondere bei der Kleinserien- oder Prototypen-Fertigung jeweils von Hand ausgewechselt werden müssen, was einem vollautomatischen Arbeitsablauf entgegensteht.

Aufgabe der Erfindung ist es, einen Teilapparat der eingangs genannten Gattung zu schaffen, der einen vollautomatischen Bearbeitungsablauf auch bei der Herstellung unterschiedlichster Werkstücke ermöglicht.

Erfindungsgemäß wird diese Aufgabe mit einem Teilapparat gelöst, der die Merkmale des kennzeichnenden Teils von Anspruch 1 aufweist.

Als Winkelmeßeinrichtung kann ein Gerät eingesetzt werden, dessen Markierungen tragender Drehteil direkt bzw. über eine elastische Kupplung mit der Teilspindel verbunden ist. Ein elektrooptischer stationärer Signalaufnehmer ist an die NC-Steuerung angeschlossen. Die bei bekannten Teilköpfen von der Lochplatte oder der Skalentrommel mitübernommene Funktion der Fixierung der Teilspindel wird gemäß der Erfindung von einer Klemm- oder Verriegelungseinrichtung übernommen, welche entweder am Außenumfang der Spindel oder aber an einem mit ihr in Antriebsverbindung stehenden Bauteil angreifen kann.

Da der erfindungsgemäße Teilapparat in NC-gesteuerten Universal-Fräsmaschinen eingesetzt werden soll, ist ein besonders reibungsarmer Spindelantriebszug notwendig. Da die bisher verwendeten Schneckengetriebe bekanntlich relativ große Reibungswerte haben, wird erfindungsgemäß ein Stirnradgetriebe mit Spielausgleich verwendet, das zwei auf Zwischenwellen aufgezogene Treibritzel aufweist, die gemeinsam mit einem auf der Spindel befestigten Stirnrad in Eingriff stehen.

Das Untersetzungsgetriebe weist zwei achsparallele, gemeinsam mit einem Motorwellenritzel kämmende Stirnräder sowie zwei auf den Wellen dieser Stirnräder aufgezogene Ritzel auf, die mit dem Spindeltreibrad in Eingriff stehen. Jedes der beiden achsparallelen Stirnräder ist einstückig mit einer Hülse versehen, die an ihrem freien Ende auf der jeweiligen Zwischenwelle aufgeklemmt ist und deren Länge sowie deren mechanische Eigenschaften so gewählt worden sind, daß beide gemeinsam den angestrebten Spielausgleich bewirken.

Auf der durchgehenden zylindrischen Außenfläche der Teilspindel ist das Antriebs-Stirnrad aufgeklemmt und die Klemm- und Fixiereinrichtung ist so ausgebildet, daß die Klemmung zwischen den beiden Radialflächen dieses Stirnrades erfolgt. Hierzu weist die Klemmeinrichtung mindestens eine an einer Seite des Spindeltreibrades schwimmend im Gehäuse angeordnete hydraulisch spannbare Klemmpatrone auf, deren beweglicher Bauteil mit einem an der anderen Seite des Spindeltreibrades längsverschiebbar im Gehäuse angeordneten Druckstück verbunden ist.

Zum Erhalt einer universellen Anwendung kann eine im Inneren der Teilspindel angeordnete Spannzange eine zentrale Gewindebohrung zur lösbaren Aufnahme einer Stange aufweisen und zum automatischen Spannen der Werkstücke mit der Kolbenstange eines zweiseitig wirkenden hydraulischen Spannzylinders fest verbunden sein.

Dadurch wird es möglich, auch die Vorgänge zum Spannen der Werkstücke — insbesondere bei automatischer Werkstückzufuhr — in die Steuerung mit zu integrieren.

Ein besonderer Vorteil des erfindungsgemäßen Teilapparates liegt noch darin, daß auf dem aus dem Gehäuse herausragenden Spindelteil von außen angreifende Planscheiben, Tischplatten und/oder Spannfutter befestigt werden können, wodurch der erfindungsgemäße Teilapparat auch die Funktion eines Drehtisches zur Bearbeitung von Werkstücken kleiner Abmessungen erfüllen kann, wobei durch die elektrooptische Meßeinrichtung und den spielfreien Antrieb gewährleistet wird, daß jede beliebige Teilung mit höchster Genauigkeit eingestellt und auch eingehalten werden kann.

Im folgenden wird ein Ausführungsbeispiel der Erfindung anhand der Zeichnung im einzelnen beschrieben. Es zeigt

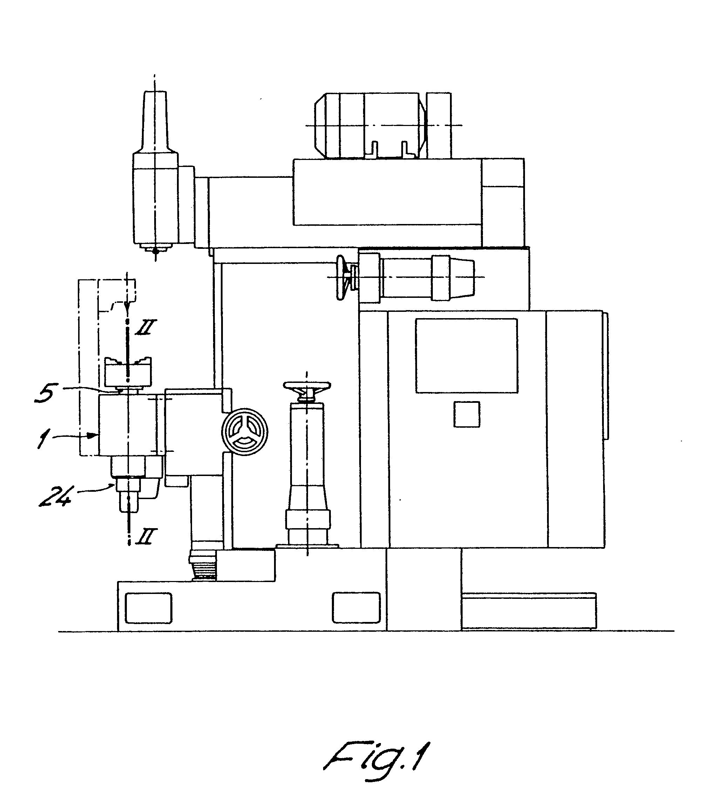

Fig. 1 eine Gesamtansicht des an einer Universal-Fräsmaschine angebauten Teilapparates;

Fig. 2 einen Axialschnitt II-II des Teilapparates nach Fig. 1,

Fig. 3 die Anordnung der Klemmeinrichtung und des Antriebsmotors bei dem Teilapparat nach Fig. 1 in teilgeschnittener Darstellung, und

Fig. 4 das Untersetzungsgetriebe des Teilapparates nach Fig. 1 in teilgeschnittener Darstellung.

Der dargestellte Teilapparat ist zum Anbau an einen Vertikalschlitten oder einen Werkstücktisch einer Universal-Fräsmaschine konzipiert. Ein Gehäuse 1 weist an mindestens zwei Außenflächen übliche Längsnuten oder auch Bolzenaufnahmen 3, 4 auf, mittels deren der Teilapparat an den geeigneten Maschinenteil angebaut sowie ein Gegenhalter mit Körnerspitze für die Werkstücke befestigt werden kann. Im Gehäuse 1 ist eine Spindel 5 über Wälzlager 6, 7 gelagert, die an ihrem aus dem Gehäuse 1 herausragenden Ende einen Werkzeug-Steilkegel 8 sowie äußere Mitnahmenuten 9 aufweist. Im mittleren Bereich der Teilspindel 5 ist auf ihrem glatten Außenmantel ein Antriebs-Stirnrad 10 mittels eines Spannringes 11 und Keilen 12 aufgeklemmt, die in eine ringförmige Ausnehmung zwischen dem Außenmantel der Teilspindel 5 und einem Ringflansch 13 des Antriebs-Stirnrades eingreifen. An den Werkzeug-Steilkegel 8 schließt ein mehrfach abgesetzter zylindrischer Innenraum 14 an, in dem ein Werkstückspanner 15 längsverschiebbar angeordnet ist. Ein Betätigungsglied 16 für Spannzangen 17 ist mit der Kolbenstange 18 eines beidseitig wirkenden Spannzylinders 19 fest verbunden, der im hinteren Teil der Spindel ausgebildet und durch einen Endpfropfen 20 dicht abgeschlossen ist. In diesem mit der Spindel 5 fest verschraubten Pfropfen 20 ist der Abtriebsteil 21 einer elastischen, drehsteifen Kupplung 22 befestigt, deren Eingangsteil 23 mit dem Drehglied einer elektrooptischen Meßeinrichtung 24 fest verbunden ist. Diese Meßeinrichtung 24 weist einen auf dem Drehglied befestigten Maßstab mit Markierungen aus z. B. Glas sowie einen elektrooptischen Lesekopf auf, der an die Programmsteuerung der Werkzeugmaschine angeschlossen ist.

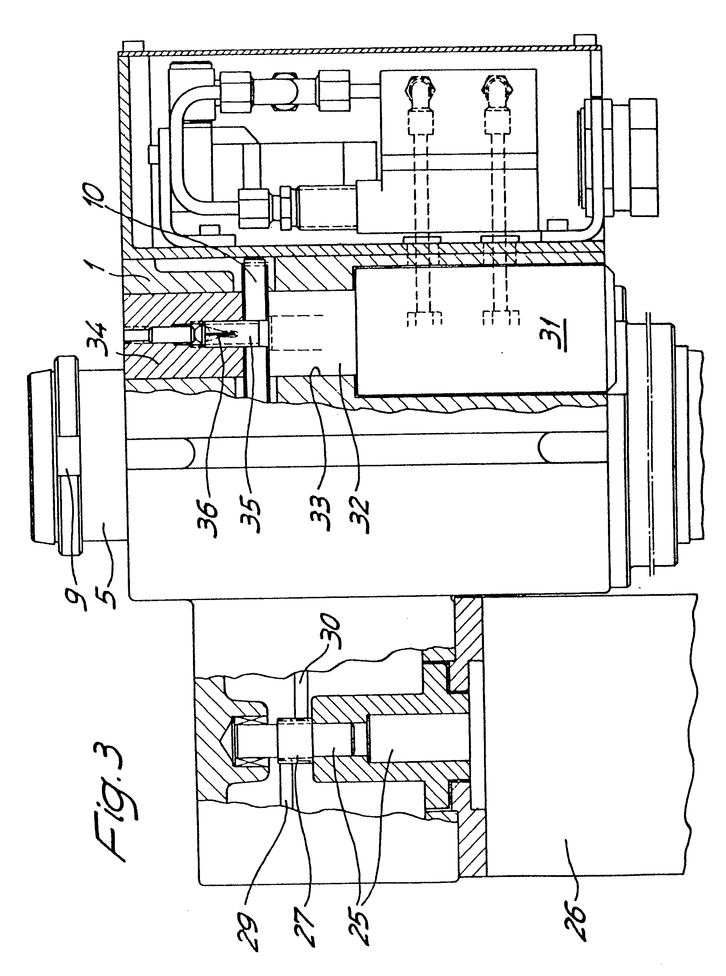

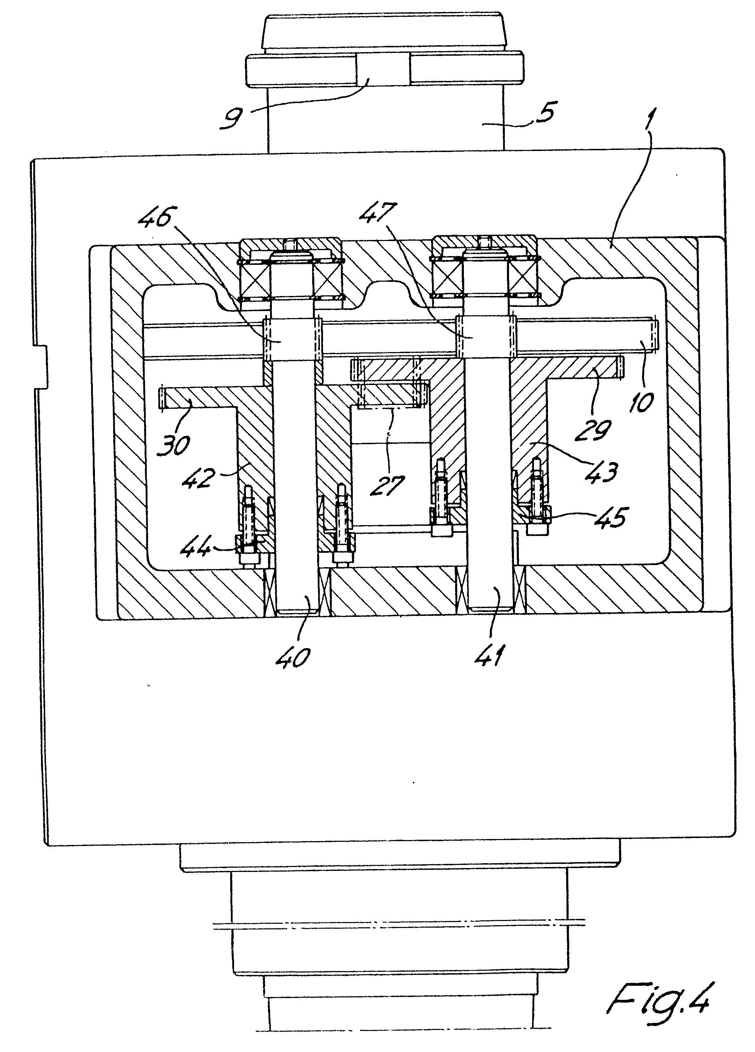

Wie aus Fig. 3, linker Teil, ersichtlich, ist auf der Ausgangswelle 25 eines E-Motors 26 mit stufenloser Drehzahl-Regelung zwischen 0 und 2000 Upm ein relativ breites Ritzel 27 aufgekeilt, das mittig zwischen zwei in Fig. 4 dargestellten Stirnrädern 29, 30 angeordnet ist und mit diesen ständig in Eingriff steht.

Im rechten Teil der Fig. 3 ist die Klemmeinrichtung im Teilschnitt dargestellt. Diese Klemmeinrichtung besteht aus einer im Gehäuse schwimmend gelagerten Klemmpatrone 31, deren zylindrischer Endteil 32 in einer Ausnehmung 33 des Gehäuses 1 spielfrei und längsverschiebbar geführt ist. In einer Verlängerung der zylindrischen Gehäuseausnehmung 33 ist ein Druckstück 34 axial verschiebbar angeordnet, das mit dem axial gegenüber dem Ansatz 32 relativ verschiebbaren Stößel 35 der Klemmpatrone 31 über einen Schraubbolzen und eine Kugelklemmung 36 fest verbunden ist. Zwischen den Stirnflächen des Zylinderansatzes 32 und des Druckstückes 34 befindet sich das Spindel-Antriebsrad 10. Um die auf dieses Antriebsrad 10 einwirkenden Klemmkräfte besser zu verteilen, sind jeweils zwei Klemmpatronen 31 symmetrisch zur Mittelachse der Teilspindel angeordnet, die jeweils gemeinsam hydraulisch betätigt und gelöst werden.

Das in Fig. 4 im Axialschnitt dargestellte Untersetzungsgetriebe ist ein Stirnradgetriebe mit Spielausgleich und weist zwei achsparallele Zwischenwellen 40, 41 auf, die beidendig in entsprechenden Querwänden des Gehäuses 1 gelagert sind. Jedes Stirnrad 29, 30 ist auf jeweils einer der Zwischenwellen 40, 41 aufgeklemmt und weist zu diesem Zwecke eine einstückig angeformte Buchse 42, 43 auf, an deren Ende eine entsprechende Keilklemmung 44, 45 angreift. Da somit lediglich die Enden der Hülsen durch eine kraftschlüssige Verbindung auf den Zwischenwellen 40, 41 festgelegt sind, können die Verzahnungen der gemeinsam mit dem — doppelt breiten — Ritzel 27 kämmenden Stirnräder 29, 30 geringfügig gegeneinander versetzt werden, um das Zahnradspiel zu kompensieren, ohne daß jedoch übermäßig große Belastungen an den jeweiligen Zähnen auftreten.

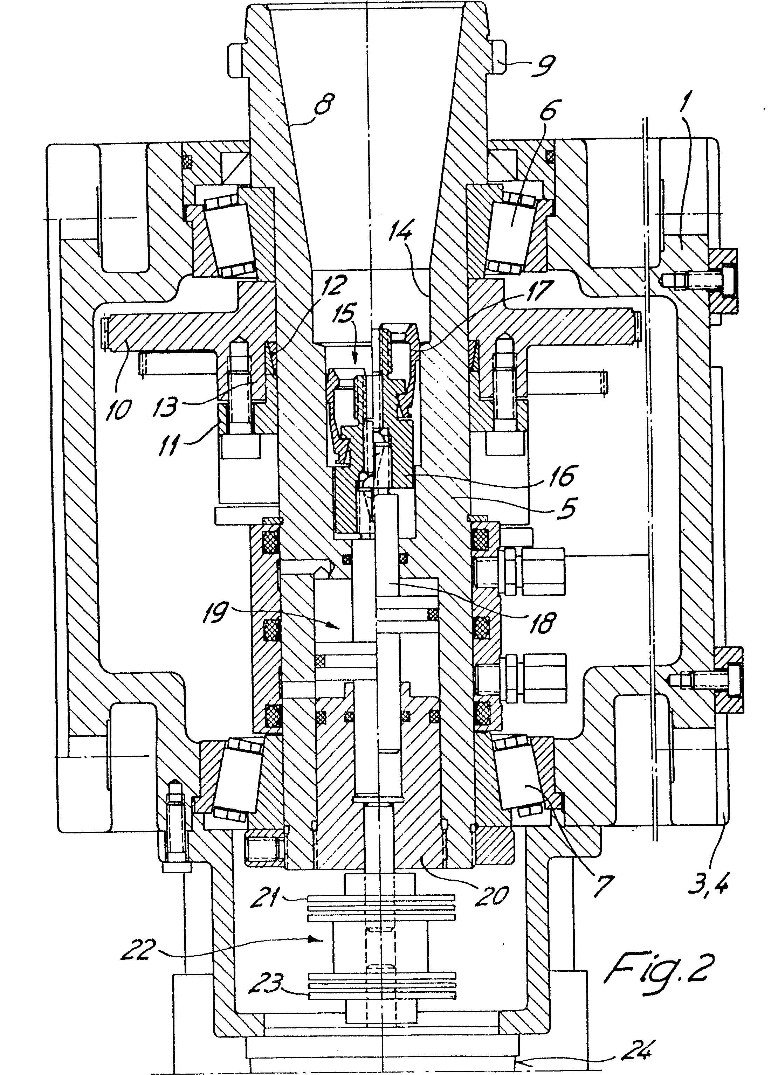

Unmittelbar über der in Fig. 4 oberen Stirnfläche des Stirnrades 29 sind auf den Zwischenwellen 40, 41 je ein Ritzel 46, 47 befestigt, die gemeinsam mit dem in Fig. 2 im einzelnen dargestellten Spindel-Antriebsrad 10 in Eingriff stehen.

Der vorstehend beschriebene Teilapparat funktioniert wie folgt:

Durch Betätigen des Spannzylinders 19 wird mittels der Spannzangen 17 oder aber eines in die zentrale Bohrung des Betätigungsstückes 16 eingeschraubten Gewindestückes eine Werkzeugaufnahme, eine Planscheibe, eine Tischplatte oder ein Spannfutter fest eingespannt und zentriert. Die Null-Einstellung erfolgt durch ein dem E-Motor 26 aus der NC-Steuerung zugeführtes Signal, welcher daraufhin mit langsamer Drehgeschwindigkeit anläuft und die Spindel mit der durch das Stirnrad-Getriebe bestimmten Untersetzung so lange verdreht, bis der elektrooptische Meßkopf die Null-Lage des Maßstabes registriert hat. Daraufhin wird der Elektromotor abgeschaltet und durch Beaufschlagen der beiden Klemmpatronen 31 mit Hydraulikflüssigkeit werden das Spindel-Antriebsrad 10 und die Spindel selbst festgeklemmt.

Daraufhin kann die Bearbeitung des eingespannten Werkstückes in üblicher Weise vorgenommen werden. Nach Beendigung des Bearbeitungsvorganges gibt die NC-Steuerung erneut ein Startsignal zum Lösen der Klemmung und zum Start des E-Motors 26 ab, der eine entsprechende Verdrehung der Spindel einleitet, deren Richtung und Größe von der Meßeinrichtung 24 kontinuierlich überwacht wird. Sobald die in der Programmsteuerung festgelegte Teilung erreicht ist, gibt die Meßeinrichtung 24 einen entsprechenden Impuls an die Steuerung ab, die daraufhin den E-Motor abschaltet und die zuvor gelöste Klemmeinrichtung durch entsprechende Steuerbefehle an die elektromagnetisch betätigten Ventile einrückt. Daraufhin kann der zweite Bearbeitungsvorgang durchgeführt werden.

Zur Bearbeitung von Spiral- oder Wendelnuten in zylindrische oder konische Werkstücke kann die Spindel 5 bei dem Teilapparat gemäß der Erfindung auch kontinuierlich mit einer von der Bearbeitungsgeschwindigkeit und dem Nutverlauf bestimmten Drehzahl angetrieben werden.

## Patentansprüche

1. Teilapparat für eine Werkzeugmaschine, bestehend aus einem Gehäuse (1) mit Spannmitteln (3, 4) zum Anbau an einen Maschinenteil, aus einer im Gehäuse (1) gelagerten Teilspindel (15) mit Werkstückaufnahme und Spanneinrichtung (16, 17, 18, 19), aus einem Antrieb (26) mit Antriebsrad (10) und Untersetzungsgetriebe (27) für die Teilspindel (5), aus einer Winkelmeßeinrichtung (24) und aus einer lösbaren Fixiervorrichtung (31—36) für die Teilspindel (5), dadurch gekennzeichnet, daß die Fixiervorrichtung (31 bis 36) und eine elektrooptisch wirkende Winkelmeßeinrichtung (24) an die Programmsteuerung der Werkzeugmaschine anschließbar sind, daß die Fixiervorrichtung (31 bis 36) mindestens eine an einer Seite des Spindelantriebsrades (10) schwimmend im Gehäuse (1) angeordnete hydraulische Klemmpatrone (31) aufweist, deren beweglicher Bauteil (35) mit einem an der anderen Seite des Spindelantriebsrades (10) längsverschiebbar im Gehäuse angeordneten Druckstück (34) verbunden ist, und daß das Untersetzungsgetriebe zwei achsparallele, gemeinsam mit einem Motorwellenritzel (27) kämmende Stirnräder (29, 30) sowie zwei auf den Zwischenwellen (40, 41) dieser Stirnräder aufgezogene Ritzel (46, 47) aufweist, die beide mit dem Spindel-Antriebsrad (10) in Eingriff stehen.

2. Teilapparat nach Anspruch 1, dadurch gekennzeichnet, daß die Teilspindel (5) über eine elastische Kupplung (22) mit dem Drehgeber der Winkelmeßeinrichtung (24) fest verbunden ist.

3. Teilapparat nach Anspruch 1 oder 2, dadurch gekennzeichnet, daß eine im Inneren der Teilspindel (5) angeordnete Spannzange (17) eine zentrale Gewindebohrung (16a) zur lösbaren Aufnahme einer Stange aufweist und mit der Kolbenstange (18) eines zweiseitig wirkenden hydraulischen Spannzylinders (19) fest verbunden ist.

## Claims

1. Indexing equipment for a machine tool, comprising a housing (1) including clamping means (3, 4) for attachment to a machine part, a dividing spindle (15) mounted in the housing (1) and having work holding means and a clamping unit (16, 17, 18, 19), a drive mechanism (26) including a drive gear (10) and a reduction gearing (27) for the dividing spindle (15), an angle measuring unit (24) and a releasable fixing device (31—36) for the dividing spindle (15), characterized in that the fixing device (31 to 36) and an electro-optically effective angle measuring unit (24) are adapted für connection to the programme control for the machine tool, that the fixing device (31 to 36) comprises at least one hydraulic clamping cartridge (31) floatingly disposed in the housing (1) on one side of the spindle drive gear (10), the movable member (35) of said cartridge being coupled to a thrust piece (34) mounted on the other side of the spindle drive gear (10) so as to be longitudinally movable in the housing, and that the reduction gearing comprises two cylindrical gears (29, 30) having parallel axes and jointly meshing with a motor shaft pinion (27), and two pinions (46, 47) mounted on the intermediate shafts (40, 41) of these cylindrical gears, both of said pinions being in engagement with the spindle drive gear (10).

2. Indexing equipment as claimed in claim 1, characterized in that the dividing spindle (5) is fixedly connected via an elastic coupling (22) to the rotary member of the angle measuring unit (24).

3. Indexing equipment as claimed in claim 1 or claim 2, characterized in that a collet (17) disposed in the interior of the dividing spindle (5) includes a central threaded bore (16a) for releasably accommodating a rod and is fixedly coupled to the piston rod (18) of a bidirectionally acting hydraulic clamping cylinder (19).

## Revendications

1. Appareil à diviser pour une machine-outil, constitué d'un carter (1) comportant des moyens de fixation (3, 4) pour montage sur une pièce de machine, d'une broche à diviser (15) portée dans le carter (1) et comportant un récepteur de pièce à usiner et un dispositif de bridage (16, 17, 18, 19), d'un entrainement (26) avec roue d'entrainement (10) et mécanisme réducteur (27) pour la broche à diviser (5), d'un dispositif de mesure angulaire (24) et d'un dispositif de verrouillage amovible (31—36) pour la broche à diviser (5), caractérisé en ce que le dispositif de verrouillage (31 à 36) et un dispositif de mesure angulaire (24) à action électro-optique peuvent être connectées à la commande de programme de la machine-outil; en ce que le dispositif de verrouillage (31 à 36) présente au moins un vérin hydraulique de verrouillage disposé dans le carter (1), flottant, d'un côté de la roue d'entrainement de la broche (10), vérin dont la partie mobile (35) est liée à une pièce de pression (34) disposée dans le carter et pouvant coulisser longitudinalement de l'autre côté de la roue d'entrainement de la broche (10); et en ce que le mécanisme réducteur présente deux roues à engrenage droit (29, 30), à axe parallèle et engrenant en commun avec un pignon (27) de l'arbre du moteur ainsi que deux pignons (46, 47) montés sur les arbres intermédiaires (40, 41) de ces roues à engrenage droit, pignon qui sont tous les deux en prise avec la roue d'entrainement de la broche (10).

2. Appareil à diviser selon la revendication 1, caractérisé en ce que la broche à diviser (5) est solidarisée, par l'intermédiaire d'un accouplement élastique (22), à l'émetteur de rotation du dispositif de mesure angulaire (24).

3. Appareil à diviser selon la revendication 1 ou la revendication 2, caractérisé en ce qu'une pince de bridage (17), disposée à l'intérieur de la broche à diviser (5), présente un taraudage central (16a) pour recevoir, de façon amovible, une tige et en ce qu'elle est solidarisée à la tige de piston (18) d'un vérin hydraulique (19) à double action.

Fig.1

0 064 741

Fig.2

Fig. 3

0 064 741

Fig.4